(19) Europäisches Patentamt
European Patent Office
Office européen des brevets

(11) Publication number: **0 200 935**
**A2**

# (12) EUROPEAN PATENT APPLICATION

(21) Application number: **86104727.2**

(22) Date of filing: **07.04.86**

(51) Int. Cl.[4]: **A 01 N 47/12**, A 01 N 47/18
//
(A01N47/12, 41:10, 41:06, 33:18),
(A01N47/18, 41:10, 41:06, 33:18)

(30) Priority: **08.04.85 US 721262**

(43) Date of publication of application: **12.11.86**
**Bulletin 86/46**

(84) Designated Contracting States: **AT BE CH DE FR GB IT LI NL SE**

(71) Applicant: **STAUFFER CHEMICAL COMPANY, Westport Connecticut 06880 (US)**

(72) Inventor: **Bracey, David J., 39 RTE Antoine-Martin, Geneva (CH)**
Inventor: **Mojica, Ellen, 845 Sunnyoaks Avenue, Campbell California 95008 (US)**

(74) Representative: **Jaeger, Klaus, Dr.rer.nat. Dipl.-Chem. et al, Jaeger, Grams & Pontani Patentanwälte Bergstrasse 48 1/2, D-8035 München-Gauting (DE)**

## (54) Synergistic herbicidal compositions.

(57) A synergistic herbicidal composition comprising a mixture of (a) an herbicidally effective amount of a thiolcarbamate of the formula

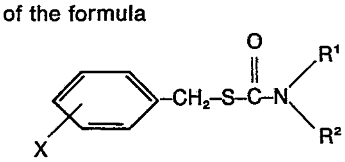

in which X is hydrogen, chlorine or bromine; and $R^1$ and $R^2$ are independently selected from the group consisting of $C_1$–$C_6$ alkyl and $C_5$–$C_7$ cycloalkyl, and (b) an herbicidally effective amount of a benzene derivative compound selected from N-butyl-N-ethyl-α,α,α-trifluoro-2,6-dinitro-p-toluidine, N-sec-butyl-4-tert-butyl-2,6-dinitroaniline, $N^4$,$N^4$-diethyl-α,α,α-trifluoro-3,5-dinitrotoluene-2,4-diamine, N-ethyl-N-(2-methyl-2-propenyl)-2,6-dinitro-4-(trifluoromethyl) benzeneamine, N-(2-chloroethyl)-2,6-dinitro-N-propyl-4-trifluoromethyl)aniline, 4-isopropyl-2,6-dinitro-N,N-dipropylaniline, 4-methylsulfonyl-2,6-dinitro-N,N-dipropylaniline, 3,5-dinitro-$N^4$,$N^4$-dipropylsulfanilamide and 4-(cyclopropylmethyl)-α,α,α-trifluoro-2,6-dinitro-N-propyl-p-toluidine, N-(1-ethylpropyl)-3,4-dimethyl-2,6-dinitrobenzenamine, at a weight ratio of (a) to (b) of from about 0.05:1 to about 32:1.

EP 0 200 935 A2

# SYNERGISTIC HERBICIDAL COMPOSITIONS

## Background of the Invention

The protection of crops from weeds and other vegetation which inhibit crop growth is a constantly recurring problem in agriculture. To help combat this problem researchers in the field of synthetic chemistry have produced an extensive variety of chemicals and chemical formulations effective in the control of such unwanted growth. Chemical herbicides of many types have been disclosed in the literature and a large number are in commercial use.

In some cases, active herbicides have been shown to be more effective in combination than when applied individually. The result is often termed "synergism," since the combination demonstrates a potency or activity level exceeding that which it would be expected to have, based on a knowledge of the individual potencies of the components. The present invention resides in the discovery that certain thiolcarbamates and certain benzene derivatives, already known individually for their herbicidal potency, display this synergism when applied in combination.

## Prior Art

The two classes of compounds forming the composition which are the subject of the present invention are independently known in the art for their effects on plant growth.

Thiolcarbamates are disclosed as herbicides in U.S. Patent Nos. 3,185,720 (Tilles et al., May 25, 1965), 3,198,786 (Tilles et al., Aug. 3, 1965), and 2,913,327 (Tilles et al., Nov. 17, 1959).

The second class of compounds forming the synergistic herbicidal compositions of the invention are benzene derivatives, as more particularly defined herein, and are commercially available.

## Description of the Invention

It has now been discovered that synergism in the control of undesirable vegetation is exhibited by compositions comprising a mixture of the following two components:

(a) an herbicidally effective amount of a thiolcarbamate of the formula

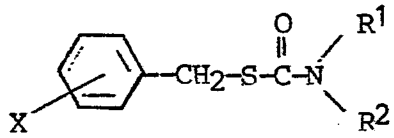

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of a benzene derivative compound selected from N-butyl-N-ethyl-α,α,α-trifluoro-2,6-dinitro-p-toluidine, N-sec-butyl-4-tert-butyl-2,6-dinitroaniline, $N^4$,$N^4$-diethyl-α,α,α-trifluoro-3,5-dinitrotoluene-2,4-diamine, N-ethyl-N-(2-methyl-2-propenyl)-2,6-dinitro-4-(trifluoromethyl) benzeneamine, N-(2-chloroethyl)-2,6-dinitro-N-propyl-4-trifluoromethyl)aniline, 4-isopropyl-2,6-dinitro-N,N-dipropylaniline, 4-methylsulfonyl-2,6-dinitro-N,N-dipropylaniline, 3,5-dinitro-$N^4$,$N^4$-dipropylsulfanilamide and 4-(cyclopropylmethyl)-α,α,α-trifluoro-2,6-di nitro-N-propyl-p-toluidine, and N-(1-ethylpropyl)-3,4-dimethyl-2,6-dinitrobenzeneamine.

The term "alkyl" is used herein to denote both straight-chain and branched-chain groups. Examples of alkyl groups include methyl, ethyl, n-propyl, isopropyl, n-butyl, sec-butyl, isobutyl, etc. All carbon atom ranges are inclusive of their upper and lower limits.

Examples of thiolcarbamates useful in the present invention are:

1. S-benzyl dipropylthiolcarbamate
2. S-benzyl ethyl, 1,2-dimethylpropylthiolcarbamate
3. S-(2-chlorobenzyl)-N,N-diethylthiolcarbamate
4. S-(4-chlorobenzyl)-N,N-diethylthiolcarbamate

These and other thiolcarbamates within the scope of this invention can be prepared by the procedures described in U.S. Patent Nos.

2,913,327, 3,185,720, and 3,198,786 mentioned above, and U.S. Patents 3,144,475, 2,992,091 and 3,207,775.

The preferred thiolcarbamate for use in the invention is S-benzyl dipropyl thiolcarbamate.

The preferred benzene derivative for use in the compositions of the invention is N-(1-ethylpropyl)-3,4-dimethyl-2,6-dinitrobenzeneamine.

The above mentioned, and all other benzene derivative compounds listed herein, are commercially available.

The terms "synergism" and "synergistic" are used herein to convey the result observed when a combination of herbicides demonstrates a potency in excess of that which the combination would be expected to produce on the basis of the potencies of each herbicide applied individually.

The term "herbicide" is used herein to denote a compound which controls or modifies the growth of plants. The term "herbicidally effective amount" is used to indicate the quantity of such a compound or combination of such compounds which is capable of producing a controlling or modifying effect. Controlling or modifying effects include all deviations from natural development, for example: killing, retardation, leaf burn, dwarfing and the like. The term "plants" is used to include all post-emergent vegetation, ranging from seedlings to established vegetation.

In the composition of this invention, the thiolcarbamate:benzene derivative weight ratio at which the herbicidal response is synergistic lies within the range of about 0.05:1 to about 31:1, preferably about 0.05:1 to about 16:1, most preferably about 2:1.

Application rates will depend upon the weeds to be controlled and the degree of control desired. In general, the compositions of this invention are most efficiently employed at a rate of 0.01 to 50 pounds per acre (0.011 to 56 kilograms per hectare) of the active ingredients, preferably 0.1 to 25 pounds per acre (0.11 to 28 kilograms per hectare).

The compositions are particularly effective in controlling weed species growing among sugarbeets, oil seed rape and small grain plant crops such as wheat, rye and the like.

## Synergism in Weed Control by use of S-Benzyl Thiolcarbamates and Pendimethalin

The herbicidal responses from a combined use of S-benzyl dipropylthiolcarbamate (Compound 1) and pendimethalin were studied by means of a greenhouse experiment. Pendimethalin (Compound 2) is:

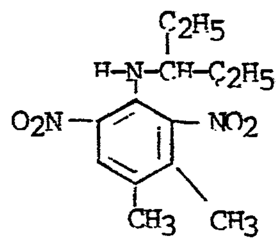

N-(1-ethylpropyl)-3,4-dimethyl-2,6-dinitrobenzenamine.

Aluminum pans (flats) measuring 19 x 8 x 6 centimeters (cm) were filled with a loamy sand soil and six furrows were impressed across the width of each flat. The following plants species were seeded into the furrows:

| | | |
|---|---|---|
| fool's parsley | (FOPA) | *Aethusa cynapium* |
| blackgrass | (BKGR) | *Alopecurus myosuroides* |
| wild oats | (WO) | *Avena fatua* |
| sugarbeet | (SBTM) | *Beta vulgaris* |
| oilseed rape | (RAJN) | *Brassica napus* |
| poverty brome | (PBRO) | *Bromus sterilis* |
| fumitory | (FUM) | *Fumaria officinalis* |
| bedstraw | (BDSW) | *Galium aparine* |
| winter barley | (BAIG) | *Hordeum vulgare* |
| perennial ryegrass | (PRGR) | *Lolium perenne* |
| scented mayweed | (MARE) | *Matricaria recutita* |
| poppy | (POP) | *Papaver spp.* |
| reed canarygrass | (REED) | *Phalaris arundinaceae* |
| annual bluegrass | (ABG) | *Poa annua* |
| mustard | (MD) | *Sinapis arvensis* |
| winter wheat | (WHFL) | *Triticum aestivum* |
| ivyleaf speedwell | (ILSW) | *Veronica hederifolia* |

Chemical solutions, which were sprayed the same day as seeding, ere prepared as follows:

Water was used to dilute both Compound 1 (80 percent emulsifiable concentrate) and Compound 2 (4 pounds per gallon emulsifiable concentrate). The chemical solutions were delivered to the soil surface for pre-emegence applications by use of a linear spray table. The table was calibrated to a spray volume of 25 gallons per acre (235 liters per hectare). Each compound was applied singly at the following rates of application:

| | Kilograms per Hectare |
|---|---|
| Compound 1 | 0.25, 0.50, 1.00 and 2.00 |
| Compound 2 | 0.0625, 0.125, 0.25 and 0.50 |

Compound 1 was applied in all possible rates of application combinations with Compound 2. The test was arranged as a 5 x 5 factorial (includes zero rate of application), and designed as a randomized complete block with two replications.

Flats were placed in a shaded greenhouse after spraying, and watered by overhead sprinkling. Air temperatures ranged from 15°C to 17°C. Flats were kept moist during the course of each experiment.

Nineteen days after treatment, each row of seedlings was visually rated for growth control due to all factors of injury. Untreated flats of seedlings were used for comparison. Zero percent injury or growth control is equivalent to growth in control flats. One hundred percent growth control is equivalent to complete kill.

Herbicide interaction responses were evaluated by use of Limpel's formula (Limpel, L.E. et al., 1962, "Weed Control by Dimethyltetrachloroterephthalate Alone and in Certain Combinations," Proc. NEWCC, 16:48-53):

$$E = X + Y - \frac{XY}{100}$$

where E = expected response (E)

where X = observed (O) value of percent growth control when the first herbicide is applied singly; and

where Y = observed (O) value or percent growth control when the second herbicide is applied singly.

The response or relationship (R) interaction from a combined herbicide treatment is synergistic (S) when an observed value is greater than an expected value. A synergistic response is understood to be one in which the interaction response is greater than the sum of responses from the individual chemical treatments. An antagonistic (A) response is the opposite situation. A response is additive (AD) when the observed and expected response is equal.

The following table shows the averaged data and results for the experiment. It can be concluded that combination applications of Compound 1 with Compound 2 results in various synergistic herbicide responses.

TABLE 1

Compound 1 = S-benzyl dipropylthiolcarbamate - Compound 2 = N-(1-ethylpropyl)-3,4-dimethyl-2,6-dinitrobenzamine

Pre-emergence: Compound 1 plus Compound 2 Admixture Study

Percent Growth Control

| kg/ha | BDSW | | | ILSW | | | POP | | | FOPA | | | FUM | | | MARE | | | WO | | | PBRO | | |
|---|---|---|---|---|---|---|---|---|---|---|---|---|---|---|---|---|---|---|---|---|---|---|---|---|
| | O | E | R | O | E | R | O | E | R | O | E | R | O | E | R | O | E | R | O | E | R | O | E | R |
| 0 + 0 | 0 | | | 0 | | | 0 | | | 0 | | | 0 | | | 0 | | | 0 | | | 0 | | |
| 0 + 1/16 | 0 | | | 0 | | | 0 | | | 0 | | | 0 | | | 0 | | | 15 | | | 0 | | |
| 0 + 1/8 | 0 | | | 0 | | | 0 | | | 0 | | | 0 | | | 0 | | | 25 | | | 0 | | |
| 0 + 1/4 | 0 | | | 0 | | | 0 | | | 0 | | | 0 | | | 0 | | | 35 | | | 0 | | |
| 0 + 1/2 | 5 | | | 10 | | | 0 | | | 0 | | | 0 | | | 10 | | | 63 | | | 13 | | |
| 1/4 + 0 | 18 | | | 10 | | | 0 | | | 0 | | | 0 | | | 0 | | | 75 | | | 13 | | |
| 1/4 + 1/16 | 5 | 18 | A | 0 | 10 | A | 0 | 0 | AD | 0 | 0 | AD | 0 | 0 | AD | 0 | 0 | AD | 63 | 79 | A | 0 | 13 | A |
| 1/4 + 1/8 | 0 | 18 | A | 0 | 10 | A | 0 | 0 | AD | 0 | 0 | AD | 0 | 0 | AD | 0 | 0 | AD | 63 | 81 | A | 0 | 13 | A |
| 1/4 + 1/4 | 10 | 18 | A | 18 | 10 | S | 0 | 0 | AD | 0 | 0 | AD | 0 | 0 | AD | 0 | 0 | AD | 73 | 84 | A | 20 | 13 | S |
| 1/4 + 1/2 | 10 | 22 | A | 15 | 19 | A | 0 | 0 | AD | 0 | 0 | AD | 0 | 0 | AD | 0 | 10 | A | 88 | 91 | A | 48 | 24 | S |
| 1/2 + 0 | 18 | | | 23 | | | - | | | 0 | | | 0 | | | 0 | | | 80 | | | 35 | | |
| 1/2 + 1/16 | 10 | 18 | A | 35 | 23 | S | 0 | - | - | 0 | 0 | AD | 0 | 0 | AD | 0 | 0 | AD | 85 | 83 | S | 75 | 35 | S |
| 1/2 + 1/8 | 10 | 18 | A | 13 | 23 | A | 0 | - | - | 0 | 0 | AD | 0 | 0 | AD | 10 | 0 | S | 90 | 85 | S | 63 | 35 | S |
| 1/2 + 1/4 | 20 | 18 | S | 0 | 23 | A | 0 | - | - | 0 | 0 | AD | 0 | 0 | AD | 0 | 0 | AD | 85 | 87 | A | 45 | 35 | S |
| 1/2 + 1/2 | 40 | 22 | S | 85 | 31 | S | 0 | - | - | 0 | 0 | AD | 0 | 0 | AD | 0 | 10 | A | 93 | 93 | AD | 78 | 44 | S |
| 1 + 0 | 20 | | | 0 | | | 0 | | | 0 | | | 0 | | | 0 | | | 88 | | | 68 | | |
| 1 + 1/16 | 33 | 20 | S | 43 | 0 | S | 0 | 0 | AD | 10 | 0 | AD | 13 | 0 | S | 15 | 0 | S | 80 | 90 | A | 55 | 68 | A |
| 1 + 1/8 | 23 | 20 | S | 30 | 0 | S | 0 | 0 | AD | 0 | 0 | AD | 0 | 0 | AD | 0 | 0 | AD | 80 | 91 | A | 50 | 68 | A |
| 1 + 1/4 | 33 | 20 | S | 60 | 0 | S | 10 | 0 | S | 0 | 0 | AD | 13 | 0 | S | 10 | 0 | S | 90 | 92 | A | 88 | 68 | S |
| 1 + 1/2 | 33 | 24 | S | 65 | 10 | S | 0 | 0 | AD | 15 | 0 | AD | 35 | 0 | S | 55 | 10 | S | 90 | 96 | A | 90 | 72 | S |
| 2 + 0 | 40 | | | 60 | | | 0 | | | 13 | | | 50 | | | 48 | | | 93 | | | 93 | | |
| 2 + 1/16 | 30 | 40 | A | 58 | 60 | A | 100 | 0 | S | 60 | 13 | S | 20 | 50 | A | 38 | 48 | A | 90 | 94 | A | 85 | 93 | A |
| 2 + 1/8 | 33 | 40 | A | 65 | 60 | S | 38 | 0 | S | 13 | 13 | AD | 28 | 50 | A | 38 | 48 | A | 80 | 95 | A | 55 | 93 | A |
| 2 + 1/4 | 40 | 40 | AD | 68 | 60 | S | 20 | 0 | S | 28 | 13 | S | 28 | 50 | A | 30 | 48 | A | 93 | 96 | A | 70 | 93 | A |
| 2 + 1/2 | 43 | 43 | AD | 70 | 64 | S | 0 | 0 | AD | 40 | 13 | S | 60 | 50 | S | 73 | 53 | S | 93 | 98 | A | 93 | 94 | A |

TABLE 1
(Continued)
Percent Growth Control

| kg/ha | REED | | | BKGR | | | PRGR | | | ABG | | | WHFL | | | BAIG | | | RAJN | | | MD | | | SBTM | | |
|---|---|---|---|---|---|---|---|---|---|---|---|---|---|---|---|---|---|---|---|---|---|---|---|---|---|---|---|
| | O | E | R | O | E | R | O | E | R | O | E | R | O | E | R | O | E | R | O | E | R | O | E | R | O | E | R |
| 0 + 0 | 0 | | | 0 | | | 0 | | | 0 | | | 0 | | | 0 | | | 0 | | | 0 | | | 0 | | |
| 0 + 1/16 | 0 | | | 0 | | | 0 | | | 0 | | | 5 | | | 10 | | | 0 | | | 0 | | | 0 | | |
| 0 + 1/8 | 50 | | | 58 | | | 20 | | | 20 | | | 8 | | | 8 | | | 0 | | | 0 | | | 0 | | |
| 0 + 1/4 | 73 | | | 58 | | | 0 | | | 10 | | | 10 | | | 8 | | | 0 | | | 0 | | | 5 | | |
| 0 + 1/2 | 90 | | | 93 | | | 70 | | | 73 | | | 15 | | | 18 | | | 0 | | | 15 | | | 13 | | |
| 1/4 + 0 | 15 | | | 73 | | | 0 | | | 0 | | | 0 | | | 0 | | | 0 | | | 0 | | | 0 | | |
| 1/4 + 1/16 | 43 | 15 | S | 68 | 73 | A | 0 | 0 | AD | 0 | 0 | AD | 0 | 5 | A | 0 | 10 | A | 0 | 0 | AD | 0 | 0 | AD | 0 | 0 | AD |
| 1/4 + 1/8 | 55 | 58 | A | 68 | 89 | A | 0 | 20 | A | 10 | 20 | A | 0 | 8 | A | 5 | 8 | A | 0 | 0 | AD | 0 | 0 | AD | 5 | 0 | S |
| 1/4 + 1/4 | 83 | 77 | S | 85 | 89 | A | 18 | 0 | S | 28 | 10 | S | 10 | 10 | AD | 13 | 8 | S | 0 | 0 | AD | 0 | 0 | AD | 13 | 5 | S |
| 1/4 + 1/2 | 85 | 92 | A | 95 | 98 | A | 70 | 70 | AD | 75 | 73 | S | 10 | 15 | A | 10 | 18 | A | 0 | 0 | AD | 0 | 15 | A | 18 | 13 | S |
| 1/2 + 0 | 70 | | | 83 | | | 28 | | | 15 | | | 0 | | | 0 | | | 0 | | | 0 | | | 0 | | |
| 1/2 + 1/16 | 93 | 70 | S | 95 | 83 | S | 0 | 28 | A | 0 | 15 | A | 5 | 5 | AD | 10 | 10 | AD | 0 | 0 | AD | 0 | 0 | AD | 8 | 0 | S |
| 1/2 + 1/8 | 88 | 85 | S | 93 | 93 | AD | 30 | 42 | A | 35 | 32 | S | 5 | 8 | A | 13 | 8 | S | 0 | 0 | AD | 0 | 0 | AD | 28 | 0 | S |
| 1/2 + 1/4 | 93 | 92 | S | 95 | 93 | S | 40 | 28 | S | 50 | 24 | S | 5 | 10 | A | 0 | 8 | A | 0 | 0 | AD | 0 | 0 | AD | 15 | 5 | S |
| 1/2 + 1/2 | 98 | 97 | S | 98 | 99 | A | 90 | 78 | S | 75 | 77 | A | 15 | 15 | AD | 10 | 18 | A | 10 | 0 | S | 15 | 15 | AD | 25 | 13 | S |
| 1 + 0 | 90 | | | 93 | | | 45 | | | 10 | | | 0 | | | 0 | | | 0 | | | 20 | | | 5 | | |
| 1 + 1/16 | 90 | 90 | AD | 93 | 93 | AD | 35 | 45 | A | 43 | 10 | S | 0 | 5 | A | 5 | 10 | A | 8 | 0 | S | 30 | 20 | S | 20 | 5 | S |
| 1 + 1/8 | 88 | 95 | A | 93 | 97 | A | 40 | 56 | A | 25 | 28 | A | 18 | 8 | S | 15 | 8 | S | 5 | 0 | S | 35 | 20 | S | 20 | 5 | S |
| 1 + 1/4 | 98 | 97 | S | 95 | 97 | A | 55 | 45 | S | 60 | 19 | S | 10 | 10 | AD | 0 | 8 | A | 0 | 0 | AD | 20 | 20 | AD | 15 | 10 | S |
| 1 + 1/2 | 100 | 99 | S | 100 | 100 | AD | 95 | 84 | S | 93 | 76 | S | 30 | 15 | S | 23 | 18 | S | 35 | 0 | S | 20 | 32 | A | 45 | 17 | S |
| 2 + 0 | 95 | | | 95 | | | 90 | | | 88 | | | 45 | | | 35 | | | 50 | | | 43 | | | 53 | | |
| 2 + 1/16 | 93 | 95 | A | 95 | 95 | AD | 60 | 90 | A | 65 | 88 | A | 15 | 48 | A | 18 | 42 | A | 20 | 50 | A | 25 | 43 | A | 40 | 53 | A |
| 2 + 1/8 | 100 | 98 | S | 100 | 98 | S | 70 | 92 | A | 73 | 90 | A | 28 | 49 | A | 20 | 40 | A | 18 | 50 | A | 30 | 43 | A | 45 | 53 | A |
| 2 + 1/4 | 100 | 99 | S | 100 | 98 | S | 85 | 90 | A | 73 | 89 | A | 30 | 51 | A | 20 | 40 | A | 28 | 50 | A | 40 | 43 | A | 48 | 55 | A |
| 2 + 1/2 | 100 | 100 | AD | 100 | 100 | AD | 100 | 97 | S | 100 | 97 | S | 85 | 53 | S | 88 | 47 | S | 50 | 50 | AD | 53 | 52 | AD | 73 | 54 | S |

Rates are given respectively. O = observed response, E = expected repsonse, R = relationship which may be: A = antagonistic, S = synergistic or AD = additive.

The compositions of the present invention show synergistic activity as herbicides in controlling the growth of undesirable vegetation when applied to such vegetation in pre- or postemergence application. The compositions are generally embodied in formulations which contain inert or occasionally active ingredients or diluent carriers in addition to the active compounds. Examples of such ingredients or carriers are water, organic solvents, surface active agents, oil, water-in-oil emulsions, wetting agents, dispersing agents, and emulsifying agents. The herbicidal formulations generally take the form of wettable powders, solutions or emulsifiable concentrates.

Wettable powders are finely divided compositions comprising a particulate carrier impregnated with the herbicidal compound and additionally containing one or more surface active agents. The surface active agent promotes rapid dispersion of the powder in aqueous medium to form stable, sprayable suspensions. A wide variety of surface active agents can be used, for example, long chain fatty alcohols and alkali metal salts of the sulfated fatty alcohols; salts of sulfonic acid; esters of long chain fatty acids; and polyhydric alcohols, in which the alcohol groups are free, omega-substituted polyethylene glycols of relatively long chain length.

The herbicidal compositions can also be applied to the foliage in the form of a solution in a suitable solvent. Solvents frequently used in herbicidal formulations include kerosene, fuel oil, xylene, petroleum fractions with boiling ranges above xylene, and aromatic petroleum fractions rich in methylated naphthalenes.

The most preferred formulations are emulsifiable concentrates which consist of an oil solution of the herbicide along with an emulsifying agent. Prior to use the concentrate is diluted with water to form a suspended emulsion of oil droplets. The emulsifiers used are usually a mixture of anionic and nonionic surfactants. Other additives such as spreading agents and stickers can be included in the emulsifiable concentrate.

The formulations described above can be applied to the vegetation sought to be controlled in any conventional manner either before or after the vegetation has emerged from the soil. The vegetation can be in any stage of development after emergence, ranging from seedlings to fully grown plants. Application can be achieved by any conventional technique such as the use of ground spraying equipment or aircraft-mounted sprayers. Various other application techniques will be apparent to one skilled in the pesticide art.

WHAT IS CLAIMED IS:

1. A synergistic herbicidal composition comprising a mixture of

(a) an herbicidally effective amount of a thiolcarbamate of the formula

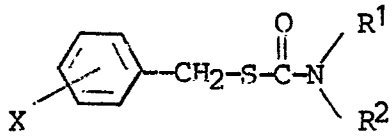

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of a benzene derivative compound selected from N-butyl-N-ethyl- α, α, α-trifluoro-2,6-dinitro-p-toluidine, N-sec-butyl-4-tert-butyl-2,6-dinitroaniline, $N^4$,$N^4$-diethyl-α, α, α-trifluoro-3,5-dinitrotoluene-2,4-diamine, N-ethyl-N-(2-methyl-2-propenyl)-2,6-dinitro-4-(trifluoromethyl) benzeneamine, N-(2-chloroethyl)-2,6-dinitro-N-propyl-4-trifluoromethyl)aniline, 4-isopropyl-2,6-dinitro-N,N-dipropylaniline, 4-methylsulfonyl-2,6-dinitro-N,N-dipropylaniline, 3,5-dinitro-$N^4$,$N^4$-dipropylsulfanilamide and 4-(cyclopropylmethyl)- α, α, α-trifluoro-2,6-di nitro-N-propyl-p-toluidine, N-(1-ethylpropyl)-3,4-dimethyl-2,6-dinitrobenzenamine, at a weight ratio of (a) to (b) of from about 0.05:1 to about 32:1.

2. The composition of Claim 1 wherein (a) is S-benzyl dipropyl thiolcarbamate and (b) N-(1-ethylpropyl)-3,4-dimethyl-2,6-dinitrobenzenamine.

3. The composition of Claim 1 wherein (a) is S-benzyl ethyl, 1,2-dimethylpropyl thiolcarbamate and (b) is N-(1-ethylpropyl)-3,4-dimethyl-2,6-dinitrobenzenamine.

4. The composition of Claim 1 wherein (a) is S-(2-chlorobenzyl)-N,N-diethyl thiolcarbamate and (b) is N-(1-ethylpropyl)-3,4-dimethyl-2,6-dinitrobenzenamine.

5. A method of controlling undesirable vegetation which comprises the pre-emergence application or postemergence application to said vegetation of a herbicidal composition comprising a mixture of

(a) an herbicidally effective amount of a thiolcarbamate of the formula

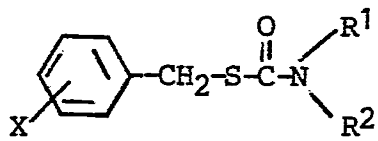

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of a benzene derivative compound selected from N-butyl-N-ethyl-α,α,α-trifluoro-2,6-dinitro-p-toluidine, N-sec-butyl-4-tert-butyl-2,6-dinitroaniline, $N^4$,$N^4$-diethyl-α,α,α-trifluoro-3,5-dinitrotoluene-2,4-diamine, N-ethyl-N-(2-methyl-2-propenyl)-2,6-dinitro-4-(trifluoromethyl) benzeneamine, N-(2-chloroethyl)-2,6-dinitro-N-propyl-4-trifluoromethyl)aniline, 4-isopropyl-2,6-dinitro-N,N-dipropylaniline, 4-methylsulfonyl-2,6-dinitro-N,N-dipropylaniline, 3,5-dinitro-$N^4$,$N^4$-dipropylsulfanilamide and 4-(cyclopropylmethyl)-α,α,α-trifluoro-2,6-di nitro-N-propyl-p-toluidine, N-(1-ethylpropyl)-3,4-dimethyl-2,6-dinitrobenzenamine, at a weight ratio of (a) to (b) of from about 0.05:1 to about 32:1.

6. The method of Claim 5 wherein (a) is S-benzyl dipropyl thiolcarbamate and (b) N-(1-ethylpropyl)-3,4-dimethyl-2,6-dinitrobenzenamine.

7. The method of Claim 5 wherein (a) is S-benzyl ethyl, 1,2-dimethylpropyl thiolcarbamate and (b) is N-(1-ethylpropyl)-3,4-dimethyl-2,6-dinitrobenzenamine.

8. The method of Claim 5 wherein (a) is S-(2-chlorobenzyl)-N,N-diethyl thiolcarbamate and (b) is N-(1-ethylpropyl)-3,4-dimethyl-2,6-dinitrobenzenamine.